# FASCICULE DE BREVET EUROPEEN

(11) **EP 1 838 515 B1**
(45) Date de publication et mention de la délivrance du brevet: **11.06.2008**
(21) Numéro de dépôt: 06743784.8
(22) Date de dépôt: 19.01.2006
(51) Int. Cl.: B29C 51/34, B65D 1/26

(54) **DISPOSITIF DE THERMOFORMAGE D'OBJETS AYANT UNE COLLERETTE DE BASE**
VORRICHTUNG ZUM THERMOFORMEN VON OBJEKTEN MIT BASISFLANSCH
DEVICE FOR THE THERMOFORMING OF OBJECTS HAVING A BASE FLANGE

(30) Priorité: 19.01.2005 FR 0500522
(43) Date de publication de la demande: 03.10.2007
(73) Titulaire: Erca Formseal, 91940 Les Ulis (FR)
(72) Inventeur: LUC, Michel, F-92290 Chatenay Malabry (FR)
(74) Mandataire: Intes, Didier Gérard André
(86) Numéro de dépôt international: PCT/FR2006/050024
(87) Numéro de publication internationale: WO 2006/090075

(56) Documents cités:
- EP-A- 0 259 214
- EP-A- 1 442 866
- DE-B- 1 271 373
- FR-A- 1 289 844
- GB-A- 1 216 804
- GB-A- 1 395 611
- US-A- 3 121 916
- US-A- 3 214 797
- US-A1- 2002 027 308
- US-B1- 6 315 150

## Description

La présente invention concerne un dispositif pour le thermoformage d'objets, comprenant un moule de thermoformage ayant au moins une chambre de thermoformage et un contre-moule ayant au moins un piston de thermoformage apte à pénétrer dans la chambre par une ouverture de cette dernière pour repousser un matériau thermoplastique dans cette chambre, le fond de la chambre de thermoformage ménageant, lors du thermoformage d'un objet, un espace annulaire pour la formation, dans ledit espace, d'un repli de matériau thermoplastique formant une partie de base d'un objet, une partie de fond de la chambre étant mobile entre une position avancée vers l'ouverture dans laquelle l'espace annulaire est ménagé entre une portion de paroi annulaire de la paroi latérale de la chambre et une paroi latérale de cette partie de fond disposée en regard de ladite portion de paroi annulaire et une position de retrait dans laquelle ladite portion de paroi annulaire et une surface annulaire d'extrémité de la paroi de la cambre sont dégagées, la partie de fond étant apte à passer de sa position de retrait à sa position avancée lors du thermoformage d'un objet pour masquer la surface annulaire d'extrémité et former un repli de matériau thermoplastique dans ledit espace annulaire, en retournant dans ce dernier le matériau thermoplastique préalablement plaqué contre la surface annulaire d'extrémité.

Des dispositifs de ce type sont connus par US 2002/0027308, GB 1 216 804, EP 0 259 214, US 3,214,797 et GB 1 395 611. Ces dispositifs permettent de réaliser des objets en forme de pots, ayant une partie de base formée par un repli de matériau prenant en particulier la forme d'une paroi annulaire. Le fond de l'objet, qui délimite son volume utile, est alors en retrait par rapport à l'extrémité de cette partie de base. Ceci permet d'obtenir des récipients ayant un volume utile inférieur à leur volume apparent tout en remplissant ces récipients sensiblement jusqu'au bord.

Avec ces dispositifs connus, le matériau initialement plaqué contre la surface annulaire d'extrémité de la paroi de la chambre est retourné dans l'espace annulaire pour former le repli précité. En effet, lors de son déplacement de sa position de retrait à sa position avancée, la partie de fond de la chambre coulisse contre la paroi latérale de cette dernière en entraînant le matériau initialement plaqué contre la surface annulaire d'extrémité.

Toutefois, les documents précités ne prévoient pas de moyens particuliers pour guider ce coulissement en faisant en sorte d'éviter les coincements de matériau entre la surface annulaire d'extrémité précitée et la paroi latérale de la partie de fond. Il en résulte un risque de malfaçon occasionnant des pertes de matériau et pénalisant les cadences de fabrication.

La présente invention vise à améliorer l'état de la technique précité de manière à réduire ce risque. Ce but est atteint grâce au fait que la surface annulaire d'extrémité est au moins en partie formée sur les sommets d'une première denture, tandis que la paroi latérale de la partie de fond qui, dans la position avancée de ce fond, délimite l'espace annulaire, est au moins en partie formée sur les sommets d'une deuxième denture, ces dentures étant imbriquées de telle sorte que les dents de la deuxième denture coulissent entre les dents de la première denture lors des déplacements de la partie de fond entre sa position de retrait et sa position avancée.

On peut choisir que la paroi annulaire formant la partie de base de l'objet thermoformé s'étende dans le prolongement de la paroi du corps de l'objet, pour donner une apparence de volume à cet objet alors qu'un volume utile plus petit, le "haut du repli" délimitant le fond du récipient, est disponible. On peut également utiliser la zone de repli pour marquer une rupture dans la forme extérieure du récipient, ce qui permet une grande variété de formes.

On relèvera que, la partie de base de l'objet étant formée par un repli, elle présente localement une épaisseur du matériau qui est plus élevée que celle de la paroi du corps de l'objet. Cette partie de base assure donc une excellente stabilité à l'objet.

Le thermoformage s'opère en deux temps. Dans un premier temps, une préforme qui est plaquée contre la paroi intérieure de la chambre, y compris contre la portion de paroi annulaire de la chambre de thermoformage et la surface annulaire d'extrémité de la paroi de cette chambre, est réalisée. Ensuite, la partie de fond de la chambre passe dans sa position avancée, pour former le repli de matériau thermoplastique.

Plus précisément, le matériau thermoplastique utilisé pour former le repli est initialement déployé, au stade de la préforme, contre la surface annulaire d'extrémité de la chambre et contre la portion de paroi annulaire précitée. Pour former le repli, le matériau qui avait été plaqué contre la surface annulaire d'extrémité est retourné dans l'espace annulaire, comme on retourne une chaussette. En d'autres termes, le matériau initialement plaqué contre la portion de paroi annulaire de la chambre forme un pli du repli, tandis que le matériau initialement plaqué contre la surface annulaire d'extrémité forme l'autre pli, à savoir le pli intérieur. Dans ce cas, chaque pli du repli a une épaisseur de matériau correspondant sensiblement à celle de la paroi de la préforme ; en d'autres termes, l'épaisseur de matériau est augmentée dans la zone de repli par rapport à l'épaisseur de paroi courante de l'objet. Cette épaisseur est doublée si le matériau est retourné sans être étiré.

En variante, lors du passage de sa position de retrait à sa position avancée, la partie de fond étire du matériau thermoplastique préalablement plaqué contre le fond de la chambre pour former ledit repli de matériau thermoplastique. En d'autres termes, le retournement du matériau est alors accompagné d'un étirement.

Les dentures sur lesquelles sont formées, au moins en partie, la surface annulaire d'extrémité de la paroi latérale de la chambre et la paroi latérale de la partie de fond sont imbriquées et permettent de parfaitement guider le coulissement de la partie de fond lors du retournement du matériau Initialement plaqué contre la surface annulaire d'extrémité, précisément dans la zone concernée par le retournement. Ainsi, les coincements de matériau entre ces deux surfaces, qui seraient dus à un guidage déficient sont évités. En outre, la partie de base du matériau finalement obtenu peut présenter des cannelures dues au contact du matériau avec les sommets des dents, ce qui contribue à la rigidité de la partie de base et donc à la stabilité du récipient.

Avantageusement, pour chaque denture, les largeurs des interstices entre les dents sont comprises entre 5/10^{e} de millimètres et 7/10^{e} de millimètres, tandis que les épaisseurs des dents sont comprises entre 4/10^{e} de millimètres et 6/10^{e} de millimètres.

De préférence, pour chaque denture; les largeurs des interstices entre les dents sont sensiblement égales à 6/10^{e} de millimètres et les épaisseurs des dents sont sensiblement égales à 5/10^{e} de millimètres.

L'invention sera bien comprise et ses avantages apparaîtront mieux à la lecture de la description détaillée qui suit, d'un mode de réalisation représenté à titre d'exemple non limitatif. Cette description se réfère aux dessins annexés sur lesquels :
- les figures 1 et 2 sont des coupes verticales d'un dispositif conforme à l'invention ;
- les figures 3A à 3H illustrent des étapes successives du procédé de l'invention, mettant en oeuvre le dispositif des figures 1 et 2 ;
- les figures 4D et 4E illustrent une variante pour les étapes représentées sur les figures 3D et 3E ;
- les figures 5D, 5F et 5F' illustrent une variante pour les étapes représentées sur les figures 3D et 3F ; et
- les figures 6 et 7 sont des vues de détail de récipients thermoformés conformément à l'invention, selon deux variantes.

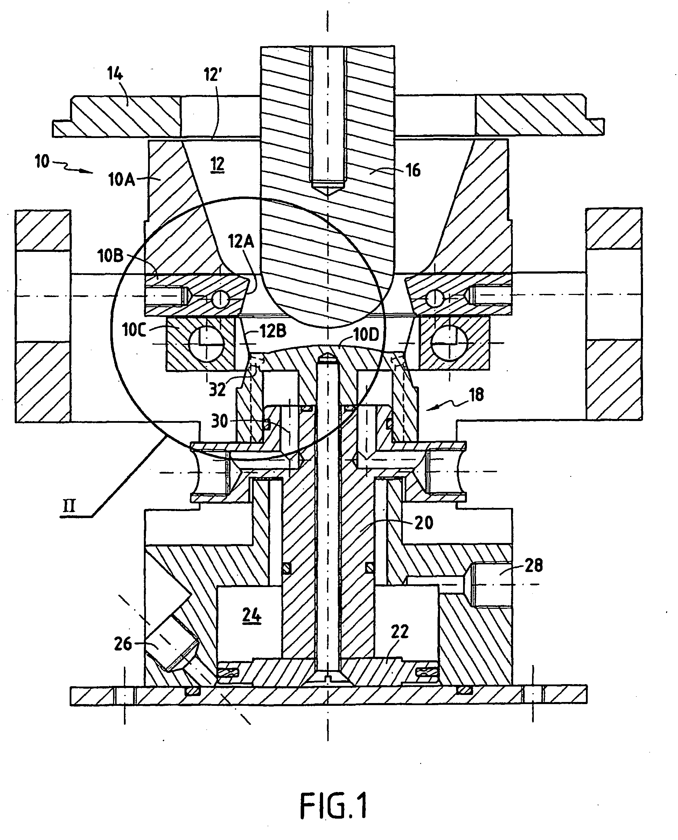

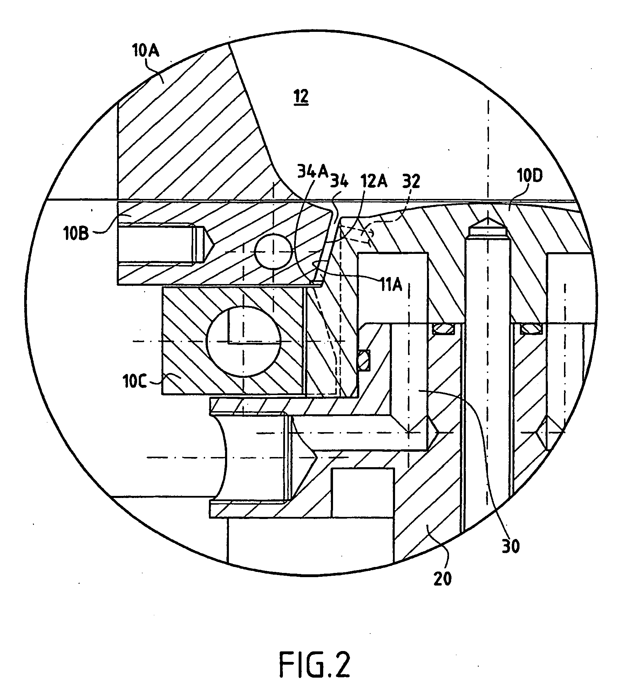

Le dispositif des figures 1 et 2 comporte un moule de thermoformage 10 ayant une chambre de thermoformage 12 et un contre-moule 14 ayant un piston de thermoformage 16 qui pénètre dans la chambre par une ouverture 12' de cette dernière pour repousser le matériau thermoplastique dans cette chambre.

Bien entendu, bien que l'on ait représenté une seule chambre de thermoformage et un seul piston de thermoformage, il doit être entendu que le dispositif de l'invention peut comprendre une pluralité de chambres, en particulier des chambres disposées selon plusieurs rangées, et un nombre correspondant de pistons, alignés avec ces chambres.

Le dispositif de l'invention peut être incorporé dans une installation de thermoformage de récipients, de remplissage de ces récipients par un produit tel qu'un produit alimentaire pâteux ou liquide, et de fermeture de ces récipients, par exemple par scellement d'un opercule en travers des ouvertures des récipients.

Dans toute la suite, on considèrera que l'ouverture 12' de la chambre correspond à l'extrémité supérieure de cette chambre, de sorte que, pour le thermoformage des récipients, le matériau thermoplastique est repoussé vers le bas. Bien entendu, une disposition inverse est également possible.

Dans l'exemple représenté, le moule 10 est en plusieurs parties pour former la chambre 12. Il comprend en effet une partie supérieure 10A dont la cavité délimite la partie supérieure de la chambre 12, qui sert à définir le corps des récipients thermoformés dans ce moule. La partie inférieure du moule est elle-même réalisée en plusieurs éléments, à savoir un élément intermédiaire 10B qui délimite une portion de la cavité en contre-dépouille, un élément inférieur 10C et une partie de fond mobile 10D.

En l'espèce, cette partie de fond 10D forme la tête d'un piston 18 mobile en va et vient verticalement. La tête 10D est rapportée sur la tige 20 du piston qui, à son extrémité opposée à la tête, porte un flasque 22 mobile dans un cylindre 24. Des alimentations en air comprimé 26 et 28, s'ouvrant respectivement aux extrémités inférieure et supérieure du cylindre, servent à manoeuvrer ce piston vers le haut ou vers le bas. Un tel système peut être prévu pour une rangée de pistons.

Par ailleurs, la tige du piston présente des conduits 30 qui servent au refroidissement du piston. De plus, des perçages 32 réalisés dans le fond 10D et alimentés par une source d'air comprimée non représentée, permettent d'insuffler de l'air comprimé dans la chambre 12, sous le matériau thermoplastique.

La figure 1 montre le fond mobile 10D dans sa position de retrait, éloignée au maximum de l'ouverture 12' de la chambre. On voit que dans cette position, une portion de paroi annulaire 12A de la chambre, réalisée en l'espèce sur la périphérie interne de la partie de moule 10B, est dégagée, de même qu'une surface annulaire d'extrémité 12B de la chambre, réalisée en l'espèce sur la périphérie interne de la partie 10C du moule, sur la paroi latérale de la chambre, est également dégagée.

La figure 2 montre la partie de fond 10D dans sa position avancée en regard de la portion de paroi annulaire 12A de la chambre. Dans cette position, on voit qu'un espace annulaire 34 est ménagé au fond de la chambre. Plus précisément, cet espace 34 est délimité entre la portion de paroi annulaire 12A de la chambre 12 précitée et une paroi latérale 11A de la partie de fond 10D qui se trouve en regard de cette portion de paroi annulaire.

Comme on le voit sur la figure 2, l'espace annulaire 34 comporte une gorge annulaire 34A qui est ménagée à l'extrémité de cet espace opposé à l'ouverture 12' de la chambre 12. En l'espèce, cette gorge est formée par une rainure annulaire creusée dans la portion de paroi annulaire 12A précitée.

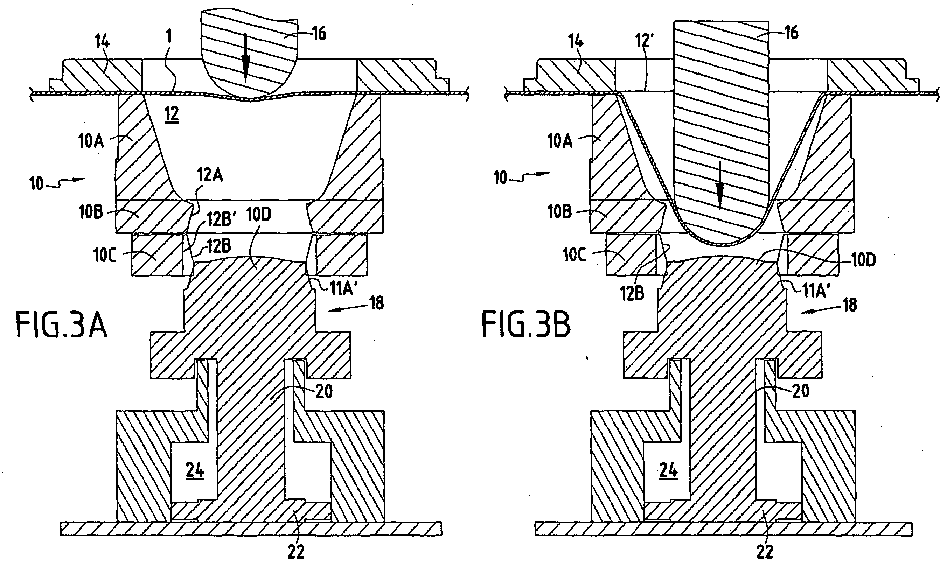

Selon le mode de réalisation représenté sur les figures 1, 2 et 3A à 3H, la surface annulaire d'extrémité 12B de la paroi de la chambre est dégagée lorsque la partie de fond 10D est en position de retrait, comme le montrent la figure 1 et les figures 3A à 3D. Dans ce cas, le repli de matériau thermoplastique qui forme la partie de base de l'objet thermoformé est réalisé en retournant, dans l'espace annulaire 34, le matériau thermoplastique initialement plaqué contre la surface annulaire d'extrémité 12B. On décrit maintenant les figures 3A à 3H, qui Illustrent le procédé de l'invention.

Sur la figure 3A, le matériau thermoplastique 1 qui a précédemment été chauffé est pincé entre le moule 10 et le contre-moule 14, le moule étant en position haute tandis que le contre-moule est en position basse. Le piston 16 amorce sa descente vers le bas et commence tout juste à déformer le matériau thermoplastique. La partie de fond 10D est dans sa position de retrait, dans laquelle les surfaces 12A et 12B sont dégagées.

Sur la figure 3B, le piston 16 a terminé sa course vers le bas, étirant ainsi le matériau thermoplastique 1 vers le fond de la chambre 12.

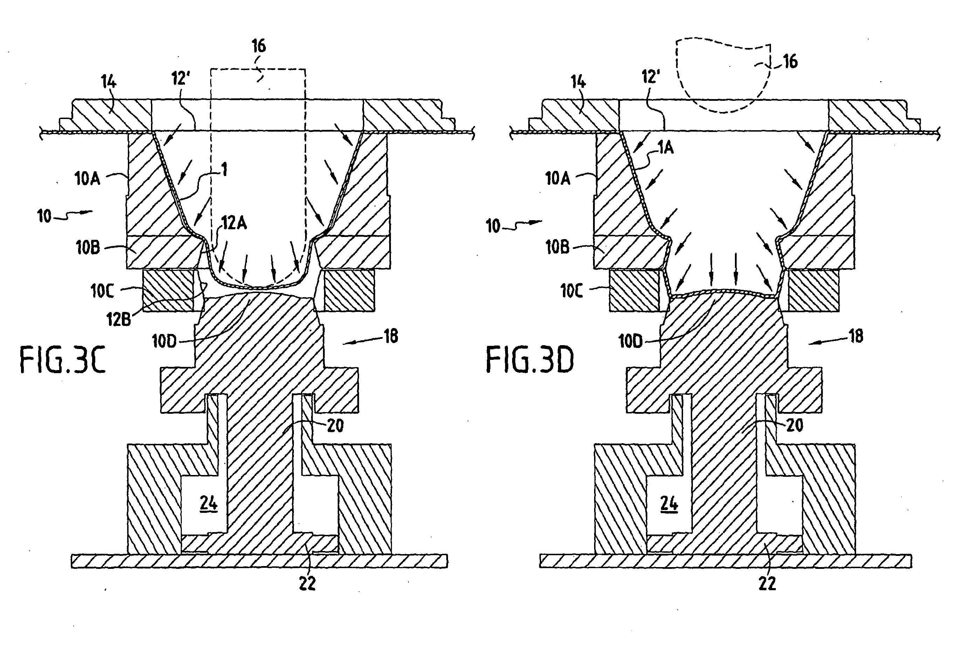

Sur la figure 3C, on commence à souffler de l'air sous pression du côté du matériau thermoplastique 1 opposé à la partie de fond 10D de la chambre. De manière connue, cet air sous pression peut être insufflé par le piston de thermoformage.

Sur la figure 3D, cette opération de soufflage a été suffisamment accomplie pour que le matériau thermoplastique soit plaqué contre la paroi intérieure de la chambre 12, y compris la portion annulaire 12A et la surface annulaire d'extrémité 12B qui sont toujours dégagées puisque la partie de fond 10D est dans sa position de retrait. Par exemple, la pression qui règne alors à l'intérieur de la préforme 1A ainsi obtenue est de l'ordre de 4 bars. Le piston 16 a alors pu remonter vers sa position dégagée de la chambre de thermoformage.

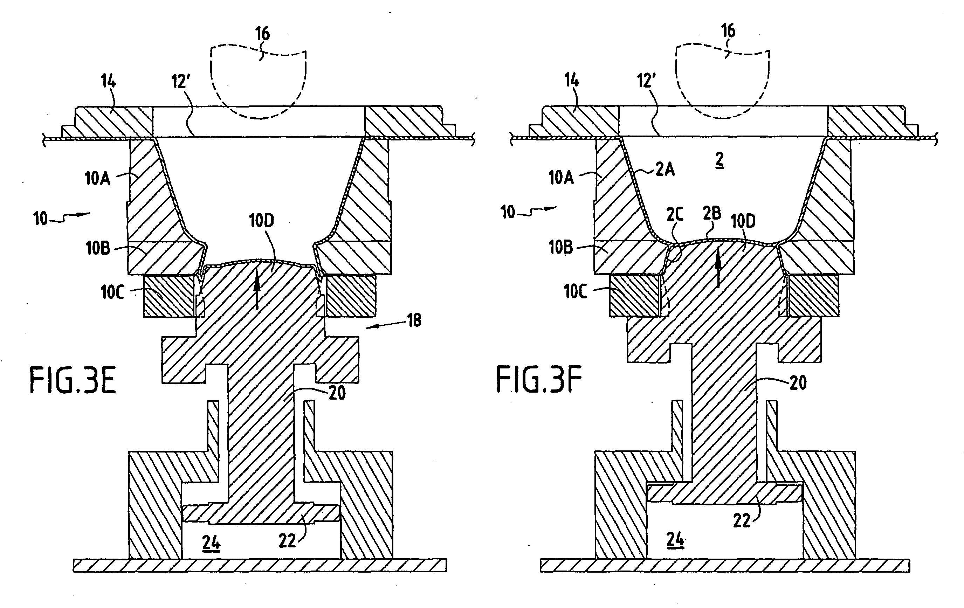

Sur la figure 3E, la course d'avancée de la partie de fond 10D vers l'ouverture 12' de la chambre a commencé. Elle a eu pour effet de commencer à retourner, contre la paroi latérale 11A de la partie de fond 10D, le matériau thermoplastique préalablement plaqué contre la surface annulaire d'extrémité 12B de la chambre 12. Ce matériau est donc replié dans l'espace annulaire 34, en cours de formation.

Sur la figure 3F, la partie de fond 10D a terminé sa course d'avancée vers l'ouverture 12' de la chambre, de sorte que le matériau thermoplastique a adopté la forme de l'objet thermoformé 2, comprenant une partie de corps 2A, une partie de fond 2B dont la forme est conditionnée par celle de la surface supérieure de la partie de fond 10D de la chambre 12, et une partie de base en forme de collerette annulaire 2C, formée par le matériau replié dans l'espace annulaire 34.

Ensuite, s'il est formé à partir d'une bande thermoplastique comme dans l'exemple représenté, le récipient pourra être découpé de cette bande après avoir été éventuellement rempli et fermé dans des stations d'une installation de formage, de remplissage et de scellement, disposées en aval du dispositif de thermoformage selon l'invention. L'étape de découpe ne sera peut être pas nécessaire si le récipient est formé à partir d'une pièce de matériau thermoplastique tel qu'un jeton Individuel.

Avantageusement, pour favoriser le retournement du matériau qui doit alors être maintenu à une température permettant sa déformation, la surface annulaire d'extrémité 12B est chauffée. En revanche, la partie de fond 10D de la chambre peut être refroidie pour stabiliser dès sa formation le repli formé dans l'espace annulaire 34.

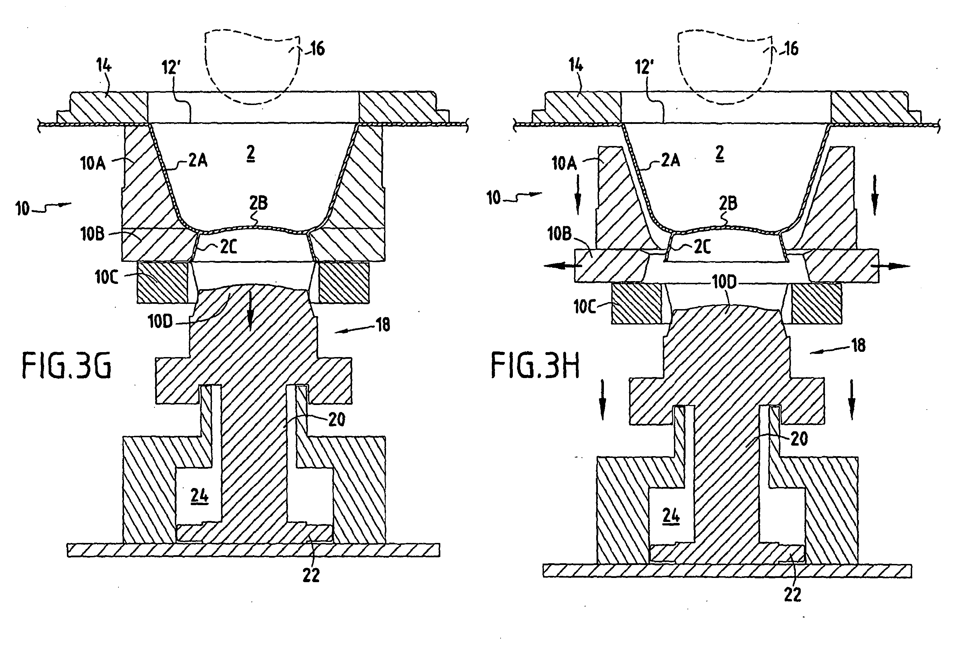

Ensuite, comme on l'indique la figure 3G, la partie de fond 10D de la chambre 12 peut être ramenée dans sa position de retrait pour permettre le démoulage du récipient 2.

Dans l'exemple représenté, la collerette annulaire 2C dans laquelle est formé le repli de matériau, a une forme en contre-dépouille puisqu'elle est évasée dans le sens allant en s'éloignant du corps 2A de l'objet. Pour permettre le démoulage de cet objet, la partie 10B du moule 10 est donc formée en deux portions séparables comme représenté sur la figure 3H, ces deux portions étant éloignées l'une de l'autre lors du démoulage. Comme le montre également la figure 3H, le moule 10 peut être déplacé vers le bas de manière à être écarté du récipient 2 qui vient d'être formé et permettre ainsi l'avancée de la bande thermoplastique dans les postes suivants de l'installation.

Dans le mode de réalisation représenté sur les figures 3A à 3H, la portion annulaire 12A est évasée dans le sens allant en s'éloignant de l'ouverture de la chambre puisque, comme indiqué précédemment, la partie de base du récipient est évasée vers le bas. Au contraire, la surface annulaire d'extrémité 12B sur laquelle est initialement plaqué le matériau qui servira, à la suite de son retournement, à former le pli intérieur du repli constituant la base de l'objet est évasée en sens contraire, c'est-à-dire qu'elle va en s'élargissant vers l'ouverture 12' de la chambre 12. Pour définir l'espace annulaire, la paroi latérale 11A est sensiblement parallèle à la portion de paroi annulaire 12A. Il importe toutefois que la partie de fond 10D puisse coulisser dans la partie 10C du moule sur la périphérie interne sur laquelle est formée la surface annulaire d'extrémité 12B. Pour cette raison, ladite surface annulaire d'extrémité 12B est au moins en partie formée sur les sommets d'une première denture 12B', tandis que la paroi latérale 11A de la partie de fond 10D est au moins en partie formée sur les sommets d'une deuxième denture 11A'. Les dentures 12B' et 11A' sont imbriquées de telle sorte que, lors des déplacements de la partie de fond 10D entre sa position de retrait et sa position avancée, les dents de la deuxième denture 11A' coulissent entre les dents de la première denture 12B'.

Avantageusement, la denture 12B' est réalisée de telle sorte que les interstices entre les dents soient trop petits pour que le matériau thermoplastique puisse pénétrer dans ces interstices lors de la formation de la préforme comme représenté sur la figure 3D. En pratique, on a constaté que, pour le thermoformage de récipients tels que des pots de yaourt à l'aide d'un matériau thermoplastique classique, les épaisseurs de ces interstices peuvent être de l'ordre de 6/10^{ème} de millimètres, tandis que les épaisseurs des dents ou ailettes peuvent être de l'ordre de 5/10^{ème} de millimètres.

De plus, dans la mesure où les dentures 11A' et 12B' sont imbriquées, le matériau qui aurait tout de même tendance à pénétrer dans les interstices de la denture 12B' pourrait être repoussé, lors du retournement du matériau dans l'espace annulaire 34, par les extrémités des dents de la denture 11A'.

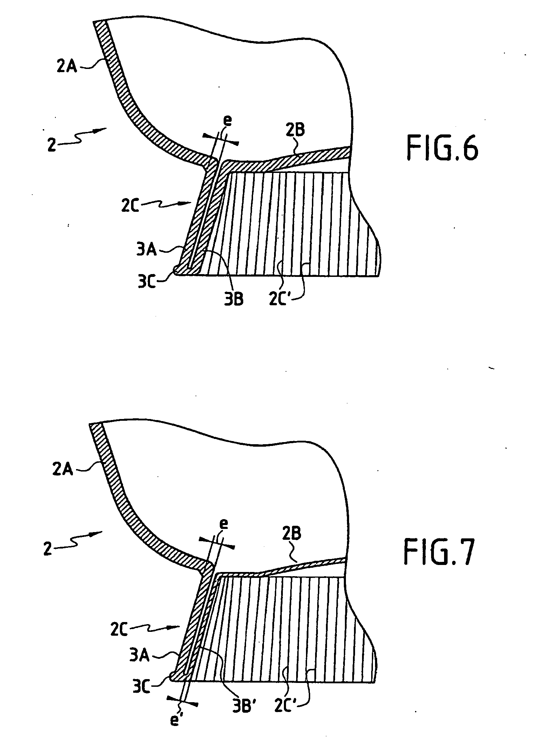

Comme représenté sur la figure 6, les marques des extrémités des dents peuvent être visibles à l'intérieur du repli de matériau formant la collerette annulaire 2C. Ainsi, la face interne de cette collerette présente des cannelures 2C'. Ces cannelures ne nuisent pas à l'effet esthétique du récipient finalement obtenu car elles sont disposées sur la face interne de la collerette. De plus, elles contribuent à la rigidité de cette collerette.

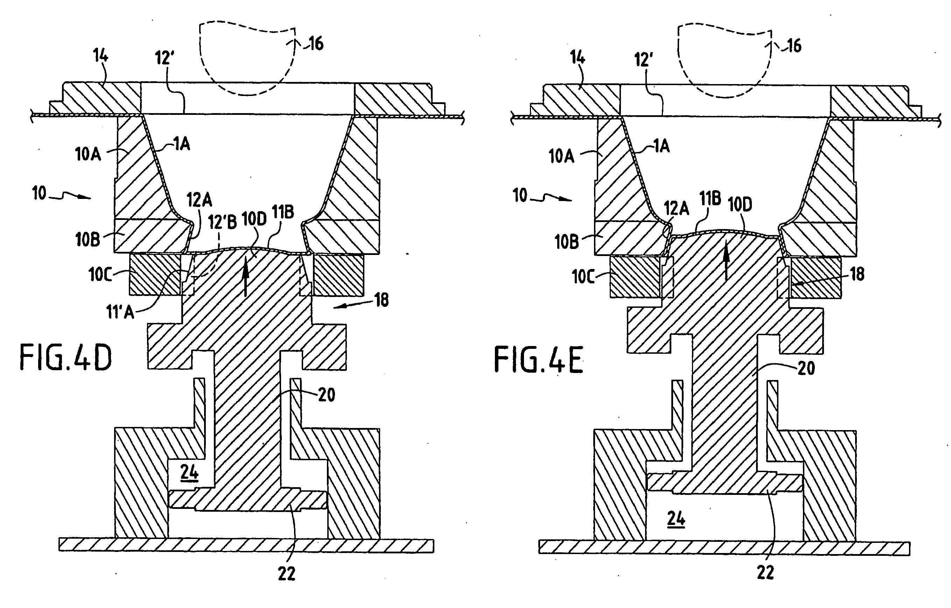

En référence aux figures 4D et 4E, on décrit maintenant une variante du procédé et du dispositif de l'invention, dans laquelle le matériau thermoplastique préalablement plaqué contre le fond de la chambre est étiré lors du déplacement de la partie de fond pour former le repli de matériau thermoplastique.

La figure 4D présente le dispositif selon cette variante, dans la situation correspondant à celle de la figure 3D, dans laquelle une préforme 1A a été formée pour le récipient. Toutefois, cette préforme présente une forme différente de celle de la figure 3D, puisque, dans la position de retrait de la partie de fond 10D représentée sur la figure 4D, seule la portion de paroi annulaire 12A de la chambre est dégagée, mais pas la surface annulaire d'extrémité 12B précédemment décrite en référence aux figures 1 à 3H. Ainsi, la partie inférieure de la préforme 1A est formée, d'une part, par du matériau thermoplastique plaqué sur la portion de paroi annulaire 12A et, d'autre part, par une paroi de fond plaquée sur le dessus 11B de la partie de fond 10D, formant le fond de la chambre et sur le bord supérieur des dents 12B'.

L'étape représentée sur la figure 4E correspond à celle de la figure 3E, dans laquelle la montée de la partie de fond 10D vers sa position avancée est amorcée. Lors de cette montée, ladite partie de fond 10B étire le matériau thermoplastique qui était initialement déposé sur son dessus 11B qui, lorsque cette partie de fond était dans sa position de retrait, formait le fond de la chambre 12.

Dans cette variante, représentée sur les figures 4D et 4E, la paroi latérale 11A de la partie 10D est toujours parallèle à la portion de paroi annulaire 12A de la chambre 12. Par conséquent, comme dans la variante des figures précédentes, il est nécessaire de recourir à des dentures 12B' et 11A' telles que celles qui ont été précédemment décrites (à ceci près que les extrémités des dents de la denture 12B' sont verticales) pour permettre le déplacement de la partie de fond sans « coincement » du matériau thermoplastique.

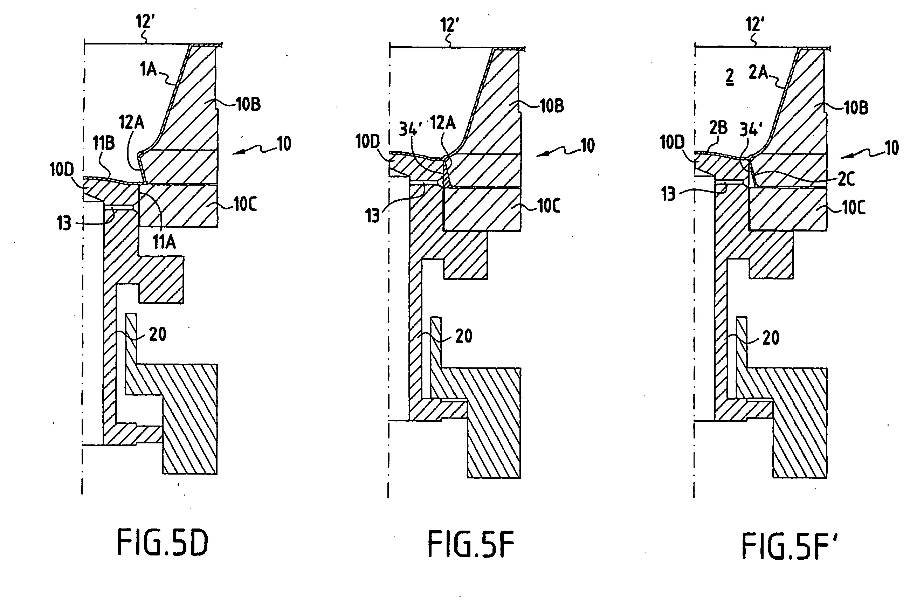

Dans la variante qui va être décrite en référence aux figures 5D à 5F', de telles dentures ne sont pas nécessaires.

En effet, cette variante s'apparente à celle des figures 4D et 4E, dans la mesure où, dans la position de retrait de la partie de fond 10D représentée sur la figure 5D, seule la portion de paroi annulaire 12A de la chambre 12 est dégagée, sans qu'une surface annulaire d'extrémité ne le soit. En conséquence, pour réaliser la préforme 1A représentée partiellement sur la figure 5D, le matériau thermoplastique est plaqué sur la paroi de la chambre, comprenant la portion de paroi annulaire 12A et le fond 11B de la chambre, constitué par le dessus de la partie de fond 10D.

La portion 10C du moule présente un alésage permettant les mouvements de va-et-vient de la partie de fond 10D, mais cet alésage présente une surface cylindrique lisse ou, tout au moins, dépourvue de dents ou d'ailettes. On constate que la surface 11A de cet alésage vient sensiblement au droit de la portion de plus petit diamètre de la partie 108 du moule.

La figure 5F représente le dispositif selon cette variante, dans un état correspondant à celui de la figure 3F, c'est-à-dire que la partie de fond 10D a été déplacée vers l'ouverture 12' de la chambre jusqu'à occuper sa position avancée, dans laquelle un espace annulaire 34' est ménagé. Toutefois, dans la variante représentée sur les figures 5D à 5F', cet espace annulaire est délimité entre, d'une part, la portion de paroi annulaire 12A évasée dans le sens opposé à l'ouverture 12' et, d'autre part, la paroi latérale cylindrique 11A de la partie de fond 10D. En conséquence, l'espace annulaire 34' présente une section droite qui va en s'élargissant dans le sens opposé à l'ouverture 12' de la chambre 12.

Dans ce mode de réalisation, le matériau thermoplastique qui, au stade de la figure 5F, est disposé dans l'espace annulaire 34' provient, d'une part, du matériau initialement plaqué contre la portion de paroi annulaire 12A de la chambre et, d'autre part, du matériau initialement plaqué contre le fond 11B de la chambre et ramené dans l'espace annulaire 34' du fait de l'étirement qui se produit lors du déplacement de la partie de fond 10D vers sa position avancée. Toutefois, au stade de la figure 5F, le matériau est disposé dans l'espace annulaire 34' en formant un repli dont les deux plis ne sont pas totalement appliqués l'un contre l'autre.

Pour former une collerette mince, dont la forme est correctement définie, on procède ensuite à une phase supplémentaire du procédé représenté sur la figure 5F'. Cette phase consiste à insuffler de l'air sous pression dans l'espace annulaire 34' à l'aide de canaux de soufflage 13 qui s'ouvrent sur la paroi latérale 11A de la partie de fond 10D, dans une région de cette paroi latérale qui, lorsque cette partie de fond est dans sa position avancée représentée sur les figures 5F et 5F', se situe au voisinage de la partie de l'espace annulaire 34' éloignée de l'ouverture 12'. Sous l'effet de la pression d'air ainsi entretenue dans l'espace annulaire 34' qui est avantageusement supérieure à celle qui règne dans la chambre 12, le matériau thermoplastique est repoussé vers la portion de paroi annulaire 12A, pour former une collerette de forme définie.

Bien entendu, dans les variantes représentées sur, d'une part, les figures 4D et 4E et, d'autre part, les figures 5D à 5F', l'espace annulaire 34 ou 34' peut présenter une gorge annulaire 34A analogue à celle qui a été décrite précédemment en référence à l'espace annulaire 34 des autres figures.

Par ailleurs, pour favoriser l'étirement de la matière grâce auquel le repli de matériau thermoplastique est réalisé, dans les variantes représentées sur les figures 4D et 4E, et sur les figures 5D à 5F, au moins une portion du fond de la chambre de thermoformage est avantageusement chauffée. Cette portion peut par exemple être constituée par la partie de fond 10D en tant que telle, ou bien seulement par la paroi latérale 11A de cette partie de fond 10D. Pour figer la déformation du matériau thermoplastique, la partie 10B du moule peut quant à elle être refroidie.

Comme on l'a indiqué précédemment, et de manière connue en soi, la chambre de thermoformage 12 peut être mise en surpression pour plaquer le matériau thermoplastique contre la paroi latérale et la partie de fond de la chambre lorsque celle-ci occupe sa position de retrait. Ceci permet d'obtenir la préforme représentée, selon les variantes, sur la figure 3D, sur la figure 4D, ou encore sur la figure 5D. Dans la variante des figures 3A à 3H, le retournement du matériau préalablement plaqué sur la surface annulaire d'extrémité 12B peut être favorisé par un soufflage d'air sous pression à partir de la partie de fond 10D, par les canaux 32 précédemment décrits en référence à la figure 2. Dans le même temps, on peut envisager de maintenir la chambre de thermoformage en légère surpression, mais en entretenant dans cette dernière une surpression diminuée lors du passage de la partie de fond de sa position de retrait à sa position avancée, ceci pour favoriser le déplacement de sa partie de fond et éviter de la soumettre à des contre efforts trop importants. En particulier, la surpression de la chambre pour la réalisation de la préforme peut être de l'ordre de 4 bars, tandis qu'une surpression de l'ordre de 1 bar peut suffire lors du déplacement de la partie de fond 10D vers sa position avancée.

Les moyens permettant d'entretenir cette surpression puis cette surpression diminuée sont de tous types connus, et comprennent par exemple une source d'air comprimé, une valve tarée à la première surpression, une valve tarée à la surpression diminuée et une connexion de l'une ou l'autre de ces valves à la source d'air comprimé et à la chambre.

En référence aux figures 6 et 7, on décrit maintenant le récipient obtenu à l'aide du dispositif et du procédé de l'invention. Ce récipient 2 comporte une partie de corps 2A et une partie de fond 2B ayant une paroi simple, ainsi qu'une partie de base 2C en forme de collerette annulaire ayant un repli formant une double paroi 3A, 3B. Bien entendu, ce repli a été formé dans l'espace annulaire 34 ou 34' ainsi qu'il a été décrit.

On constate que le bord de la partie de base 2C présente une nervure annulaire 3C. Cette nervure provient du matériau thermoplastique accumulé dans la gorge annulaire 34A de l'espace annulaire 34 ou 34'. Elle favorise la rigidité du bord de la collerette 2C et donc le maintien correct du récipient lorsqu'il est posé sur un support.

On constate également que la face interne de la collerette annulaire, c'est-à-dire la face interne du pli 3B, présente des cannelures 2C' qui, ainsi qu'il a été indiqué, résultent des dentures 12B' et 11A'.

Sur la figure 6, on constate que les deux plis 3A, 3B de la collerette 2C ont sensiblement la même épaisseur e, qui est celle du matériau thermoplastique initialement plaqué contre la portion de paroi annulaire 12A et la surface annulaire d'extrémité 12B.

Sur la figure 7, est représenté un récipient 2 réalisé conformément à la variante des figures 4D et 4E. Ce récipient comporte une partie de corps 2A identique à celle du récipient de la figure 6 et une partie de fond 2B, qui ont toutes deux une paroi simple, ainsi qu'une partie de base 2C en forme de collerette annulaire, ayant un repli formant une double paroi 3A, 3B'. Le pli 3A est identique à celui de la figure 6, tandis que le pli 3B', de même que la partie de fond 2B', proviennent de l'étirement du matériau thermoplastique initialement plaqué contre le fond 11B de la chambre. Pour cette raison, leur épaisseur e' est inférieure à l'épaisseur e du pli 3A. Les cannelures 2C' de la face interne de la collerette annulaire sont également présentes sur la figure 7.

Comme on l'a indiqué précédemment, avec le mode de réalisation des figures 5D à 5F', les dentures 12B' et 11A' ne sont plus nécessaires. En conséquence, le récipient obtenu à l'aide de cette variante sera analogue à celui de la figure 7, à ceci près qu'il sera exempt des cannelures 2C'.

Avec les exemples représentés, la collerette formant la partie de base est évasée dans le sens allant en s'éloignant du corps. Ceci permet d'utiliser cette collerette comme un pied de support, assurant d'une part la stabilité du récipient et, d'autre part, lui conférant l'effet esthétique souhaité. En variante, on pourrait utiliser l'invention pour réaliser un récipient dont la face extérieure de la collerette (pli 3A') s'étendrait dans le prolongement de la paroi du corps du récipient. Par exemple, celul-ci pourrait avoir la forme d'un bol ou une forme tronconique. Dans ce cas, le récipient, vu de l'extérieur, aurait un volume apparent supérieur au volume qu'il a en réalité, ce qui permet de le remplir jusqu'au bord avec un volume de produit réduit.

## Revendications

1. Dispositif pour le thermoformage d'objets (2), comprenant un moule de thermoformage (10) ayant au moins une chambre de thermoformage (12) et un contre-moule (14) ayant au moins un piston de thermoformage (16) apte à pénétrer dans la chambre par une ouverture (12') de cette dernière pour repousser un matériau thermoplastique dans cette chambre, le fond (10D) de la chambre de thermoformage ménageant, lors du thermoformage d'un objet, un espace annulaire (34, 34') pour la formation, dans ledit espace, d'un repli de matériau thermoplastique formant une partie de base (2C) d'un objet (2), une partie de fond (10D) de la chambre (12) étant mobile entre une position avancée vers l'ouverture (12') dans laquelle l'espace annulaire (34, 34') est ménagé entre une portion de paroi annulaire (12A) de la paroi latérale de la chambre et une paroi latérale (11A) de cette partie de fond disposée en regard de ladite portion de paroi annulaire et une position de retrait dans laquelle ladite portion de paroi annulaire (12A) et une surface annulaire d'extrémité (12B) de la paroi de la chambre (12) sont dégagées, la partie de fond (10D) étant apte à passer de sa position de retrait à sa position avancée lors du thermoformage d'un objet pour masquer la surface annulaire d'extrémité (12B) et former un repli (2C) de matériau thermoplastique dans ledit espace annulaire (34, 34'), en retournant dans ce dernier le matériau thermoplastique préalablement plaqué contre la surface annulaire d'extrémité (12B),
**caractérisé en ce que** la surface annulaire d'extrémité (12B) est au moins en partie formée sur les sommets d'une première denture (12B'), tandis que la paroi latérale (11A) de la partie de fond (100) qui, dans la position avancée de ce fond, délimite l'espace annulaire (34), est au moins en partie formée sur les sommets d'une deuxième denture (11A'), ces dentures étant imbriquées de telle sorte que les dents de la deuxième denture coulissent entre les dents de la première denture lors des déplacements de la partie de fond entre sa position de retrait et sa position avancée.

2. Dispositif selon la revendication 1, **caractérisé en ce que** l'espace annulaire (34, 34') comprend une gorge (34A) annulaire à l'extrémité dudit espace opposée à l'ouverture.

3. Dispositif selon la revendication 1 ou 2, **caractérisé en ce que** lors du passage de sa position de retrait à sa position avancée, la partie de fond (10D) étire du matériau thermoplastique préalablement plaqué contre le fond (11B) de la chambre (12) pour former ledit repli de matériau thermoplastique.

4. Dispositif selon l'une quelconque des revendications 1 à 3, **caractérisé en ce que** la surface annulaire d'extrémité (12B) est chauffée.

5. Dispositif selon l'une quelconque des revendications 1 à 4, **caractérisé en ce que** la surface annulaire d'extrémité (12B) de la paroi latérale de la chambre (12) est évasée dans le sens allant vers l'ouverture (12') de cette chambre, tandis que la paroi latérale (11A) de la partie de fond (10D) qui, dans la position avancée de cette partie, délimite l'espace annulaire (34), est évasée en sens contraire.

6. Dispositif selon l'une quelconque des revendications 1 à 5, **caractérisé en ce qu'**il comporte des moyens pour mettre la chambre de thermoformage (12) en surpression pour plaquer le matériau thermoplastique contre la paroi latérale et la partie de fond (10D) de la chambre lorsque cette partie est dans sa position de retrait et pour entretenir dans la chambre une surpression diminuée lors du passage de la partie de fond, de sa position de retrait à sa position avancée.

7. Dispositif selon l'une quelconque des revendications 1 à 6, **caractérisé en ce que**, pour chaque denture, les largeurs des interstices entre les dents sont comprises entre 5/10^{e} de millimètres et 7/10^{e} de millimètres, tandis que les épaisseurs des dents sont comprises entre 4/10^{e} de millimètres et 6/10^{e} de millimètres.

8. Dispositif selon l'une quelconque des revendications 1 à 7, **caractérisé en ce que**, pour chaque denture, les largeurs des interstices entre les dents sont sensiblement égales à 6/10^{e} de millimètres et les épaisseurs des dents sont sensiblement égales à 5/10^{e} de millimètres.

## Claims

1. A device for thermoforming objects (2), said device comprising a thermoforming mould (10) having at least one thermoforming chamber (12) and a countermould (14) having at least one thermoforming piston (16) suitable for penetrating into the chamber via an opening (12') therein for the purpose of pushing a thermoplastic material into said chamber, the bottom wall (10D) of the thermoforming chamber acting during thermoforming of an object to form an annular space (34, 34') for the purpose of forming, in said space, a fold of thermoplastic material forming a base portion (2C) of an object (2), a bottom wall portion (10D) of the chamber (12) being mounted to move between a deployed position in which it deployed towards the opening (12') and in which the annular space (34, 34') is formed between an annular wall portion (12A) of the side wall of the chamber and a side wall (11A) of said bottom wall portion that is disposed facing said annular wall portion, and a retracted position in which said annular wall portion (12A) and an end annular surface (128) of the wall of the chamber (12) are unobstructed, the bottom wall portion (10D) being suitable for going from its retracted position to its deployed position while an object is being thermoformed so as to mask the end annular surface (12B) and so as to form a fold (2C) of thermoplastic material in said annular space (34, 34'), by folding over therein the thermoplastic material that was previously pressed against the end annular surface (12B);
said device being **characterised in that** the end annular surface (12B) is formed at least in part on the tops of a first set of teeth (12B'), whereas the side wall (11A) of the bottom wall portion (10D) that, when the bottom wall portion is in the deployed position, defines the annular space (34), is formed at least in part on the tops of a second set of teeth (11A'), said teeth interfitting so that the teeth of the second set of teeth slide between the teeth of the first set of teeth while the bottom wall portion is moving between its retracted position and its deployed position.

2. A device according to claim 1, **characterised in that** the annular space (34, 34') is provided with an annular groove (34A) at that end of said space that is further from the opening.

3. A device according to claim 1 or claim 2, **characterised in that**, on going from its retracted position to its deployed position, the bottom wall portion (10D) stretches thermoplastic material that was previously pressed against the bottom wall (11B) of the chamber (12) so as to form said fold of thermoplastic material,

4. A device according to any one of claims 1 to 3, **characterised in that** the end annular surface (12B) is heated.

5. A device according to any one of claims 1 to 4, **characterised in that** the end annular surface (12B) of the side wall of the chamber (12) flares going towards the opening (12') of said chamber, while the side wall (11A) of the bottom wall portion (10D) which, when the bottom wall portion is in the deployed position, defines the annular space (34), flares in the opposite direction.

6. A device according to any one of claims 1 to 5, **characterised in that** it comprises means for putting the thermoforming chamber (12) under extra pressure so as to press the thermoplastic material against the side wall and against the bottom wall portion (10D) of the chamber when said bottom wall portion is In its retracted position, and so as to maintain in the chamber a reduced amount of extra pressure white the bottom wall portion is going from its retracted position to its deployed position.

7. A device according to any one of claims 1 to 6, **characterised in that**, for each set of teeth, the width of the gaps between the teeth lies in the range 5/10^{ths} of a millimetre to 7/10^{ths} of a millimetre, white the thickness of the teeth lies in the range 4/10^{ths} of a millimetre to 6/10^{ths} of a millimetre.

8. A device according to any one of claims 1 to 7, **characterised in that**, for each set of teeth, the width of the gaps between the teeth is substantially equal to 6/10^{ths} of a millimetre, and the thickness of the teeth is substantially equal to 5/10^{ths} of a millimetre.

## Patentansprüche

1. Vorrichtung zum Thermoformen von Gegenständen (2), die eine Form zum Thermoformen (10) mit wenigstens einer Thermoformkammer (12) und eine Gegenform (14) mit wenigstens einem Thermoformkolben (16) aufweist, der dazu geeignet ist, in die Kammer durch eine Öffnung (12') von dieser einzudringen, um ein Thermoplastmaterial in diese Kammer zurückzudrängen, wobei der Boden (10D) der Thermoformkammer beim Thermoformen eines Gegenstandes einen ringförmigen Raum (34, 34') zur Bildung einer Falz aus Thermoplastmaterial in dem Raum vorsieht, die einen Basisteil (2C) eines Gegenstands (2) bildet, wobei ein Bodenteil (10D) der Kammer (12) raschen einer zu der Öffnung (12') hin ausgefahrenen Position, in welcher der ringförmige Raum (34, 34') zwischen einem ringförmigen Wandabschnitt (12A) der Seitenwand der Kammer und eher Seitenwand (11A) dieses Bodenteils vorgesehen ist, die gegenüber dem ringförmigen Wandabschnitt angeordnet ist, und einer eingefahrenen Position beweglich ist, in welcher der ringförmige Wandabschnitt (12A) und eine ringförmige Endfläche (12B) der Wand der Kammer (12) gelöst sind, wobei der Bodenteil (10D) dazu geeignet ist, beim Thermoformen eines Gegenstandes aus seiner eingefahrenen Position in seine ausgefahrene Position überzugehen, um die ringförmige Endfläche (12B) zu maskieren und einen Falz. (2C) aus Thermoplastmaterial in dem ringförmigen Raum (34, 34') zu bilden, indem in diesen das Thermoplastmaterial zurückgebracht wird, das vorher gegen die ringförmige Endfläche (12B) gedrückt war, **dadurch gekennzeichnet, daß** die ringförmige Endfläche (12B) wenigstens teilweise an den Scheiteln einer ersten Verzahnung (12B') gebildet ist, während die Seitenwand (11A) des Bodenteils (10D), die in der ausgefahrenen Position dieses Bodens den ringförmigen Raum (34) abgrenzt, wenigstens teilweise an den Scheiteln einer zweiten Verzahnung (11A') gebildet ist, wobei diese Verzahnungen derart verschachtelt sind, daß die Zähne der zweiten Verzahnung bei Verschiebungen des Bodenteils zwischen seiner eingefahrenen Position und seiner ausgefahrenen Position zwischen den Zähnen der ersten Verzahnung gleiten.

2. Vorrichtung nach Anspruch 1, **dadurch gekennzeichnet, daß** der ringförmige Raum (34, 34') eine ringförmige Kehle (34A) am Ende des Raums gegenüber der Öffnung aufweist.

3. Vorrichtung nach Anspruch 1 oder 2, **dadurch gekennzeichnet, daß** der Bodenteil (100) beim Übergang aus seiner eingefahrenen Position in seine ausgefahrene Position Thermoplastmaterial zieht, das vorher gegen den Boden (11B) der Kammer (12) gedrückt war, um den Falz aus Thermoplastmaterial zu bilden.

4. Vorrichtung nach einem der Ansprüche 1 bis 3, **dadurch gekennzeichnet, daß** die ringförmige Endfläche (12B) erwärmt wird.

5. Vorrichtung nach einem der Ansprüche 1 bis 4, **dadurch gekennzeichnet, daß** die ringförmige Endfläche (12B) der Seitenwand der Kammer (12) in einer Richtung aufgeweitet ist, die zu der Öffnung (12') dieser Kammer geht, während die Seitenwand (11A) des Bodenteils (10D), die in der ausgefahrenen Position dieses Teils den ringförmigen Raum (34) abgrenzt, in der entgegengesetzten Richtung aufgeweitet ist.

6. Vorrichtung nach einem der Ansprüche 1 bis 5, **dadurch gekennzeichnet, daß** sie Mittel aufweist, um die Thermoformkammer (12) unter Überdruck zu setzen, um das Thermoplastmaterial gegen die Seitenwand und den Bodenteil (10D) der Kammer zu drücken, wenn sich dieser Teil in seiner eingefahrenen Position befindet, und um in der Kammer beim Übergang des Bodenteils aus seiner eingefahrenen Position in seine ausgefahrene Position einen verminderten Überdruck aufrechtzuerhalten.

7. Vorrichtung nach einem der Ansprüche 1 bis 6, **dadurch gekennzeichnet, daß** für jede Verzahnung die Breiten der Zwischenräume zwischen den Zähnen zwischen 5/10 Millimetern und 7/10 Millimetern liegen, während die Dicken der Zähne zwischen 4/10 Millimetern und 6/10 Millimetern liegen.

8. Vorrichtung nach einem der Ansprüche 1 bis 7, **dadurch gekennzeichnet, daß** für jede Verzahnung die Breiten der Zwischenräume zwischen den Zähnen im wesentlichen gleich 6/10 Millimetern sind und die Dicken dieser Zähne im wesentlichen gleich 5/10 Millimetern sind.
